# EUROPEAN PATENT APPLICATION

(11) **EP 3 206 337 A1**
(43) Date of publication of application: **16.08.2017**
(21) Application number: 15848996.3
(22) Date of filing: 29.04.2015
(51) Int. Cl.: H04L 12/26

(54) **DETECTION METHOD, SENDING END, RECEIVING END AND DETECTION SYSTEM**

(30) Priority: 08.10.2014 CN 201410528632
(71) Applicant: ZTE Corporation, Shenzhen, Guangdong 518057 (CN)
(72) Inventor: XIONG, Jun, Shenzhen Guangdong 518057 (CN)
(74) Representative: Deambrogi, Edgardo
(86) International application number: PCT/CN2015/077748
(87) International publication number: WO 2016/054911

(57) **Abstract**

Provided is a detection method, a sending terminal, a receiving terminal and a detection system. The method includes that: when detecting that a detection condition for COUNT of a Packet Data Convergence Protocol (PDCP) layer is satisfied, a sending terminal sends a detection packet carrying a COUNT value to a receiving terminal via the PCDP layer; and after receiving the detection packet which is sent via the PDCP layer and carries the COUNT value, the receiving terminal compares the COUNT value in the detection packet with a COUNT value stored in the receiving terminal to judge whether the COUNT value in the detection packet and the COUNT value stored in the receiving terminal are consistent.

## Description

### Technical Field

The present disclosure relates to the field of communications, and in particular to a detection method for detecting a count parameter COUNT of a Packet Data Convergence Protocol (PDCP) layer in a Long Term Evolution (LTE) communication system, a sending terminal, a receiving terminal and a detection system.

### Background

In a wireless communication LTE network of a 4th generation mobile communication system, a PDCP layer of a user plane protocol stack is mainly responsible for encrypting and decrypting air interface data, performing completeness protection and header compression, and realizing ordered data delivery and data completeness during a switching process, wherein a parameter involved in encryption and decryption of the air interface data is a COUNT value. The COUNT value is 32 bits, of which a low-order part is a Serial Number (SN) of a packet and other high-order parts are referred to as a Hyper Frame Number (HFN). In an LTE system, an SN part is transmitted only in a PDCP packet on the basis of a principle for fully saving air interface bandwidths, however, an HFN part is maintained by a receiving terminal and a sending terminal (i.e., a terminal and a base station) respectively according to a turnover condition of the SN. If the HFNs stored by the base station and the terminal are inconsistent, it is caused that the COUNT value is wrong, thereby resulting in decryption failure so that received data are abandoned, which cannot be recovered once the above-mentioned problem happens.

In order to solve the above-mentioned problem, a 3rd Generation Partnership Project (3GPP) 36.331 protocol provides a detection method for COUNT of a PDCP layer, which is used for keeping the COUNT consistent in the base station and the terminal. The method includes the following steps. When the base station needs to detect COUNT, a Counter Check message is sent to the terminal, and the terminal fills a Counter Check Response message according to actual situations and returns the Counter Check Response message to the base station, wherein the Counter Check message sent by the base station carries high-orders of uplink and downlink COUNT values of all Data Radio Bearers (DRB). The method for filling the Counter Check Response by the terminal is as follows. When one DRB of User Equipment (UE) is not in the Counter Check message, DRB-Identity and corresponding uplink and downlink COUNT values are filled in the Counter Check Response. When a high-order of the COUNT value of one DRB of the UE is different from the high-order of the COUNT value of the corresponding DRB in the Counter Check message, corresponding uplink and downlink COUNT values of the UE are filled in the Counter Check Response. When one DRB in the Counter Check is not in the UE, the high-order of the COUNT value of the DRB is set, in the Counter Check Response, to be the same as the high-order in the Counter Check, and the low-order is set to be 0.

The above-mentioned method may alleviate the situation of inconsistency in COUNT of the receiving terminal and the sending terminal to a certain extent. However, the Counter Check message and the Counter Check Response message involved in the above-mentioned detection method are messages belonging to a Radio Resource Control (RRC) layer. The content in the message corresponds to a COUNT value of a PDCP layer at a moment, messages of the RRC layer are borne on Signalling Radio Bearers (SRB), and packets of the PDCP layer are borne on the DRB. The SRB and the DRB are different on dispatching priority. Therefore, in case of resource shortage, it cannot be ensured that the messages of the RRC layer and the messages of the PDCP layer are dispatched out at the same time, thereby resulting in that the messages of the RRC layer and the messages of the PDCP layer reach the opposite terminals at different moments probably. When the messages arrive at the opposite terminals at different moments, the COUNT value of the PDCP layer carried in the Counter Check message/Counter Check Response message is not a COUNT value at a message receiving moment actually, which may result in a wrong detection result. That is, the detection method in the related art may result in that a detection result is wrong due to adoption of a message of an RRC layer as a detection packet.

### Summary

The present disclosure provides a detection method, a sending terminal, a receiving terminal and a detection system, which solves the problem in the related art that a detection result is wrong due to adoption of a message of an RRC layer as a detection packet.

In an embodiment, a detection method for a count parameter COUNT of a PDCP layer may include that: it is detected whether a detection condition for the COUNT of the PDCP layer is satisfied; and when the detection condition is satisfied, sending a detection packet carrying a COUNT value via the PCDP layer.

The above-mentioned embodiment may further include that: a data packet, which is prior to and immediately adjacent to the detection packet in the PDCP layer, is determined, and a COUNT value corresponding to the data packet is taken as the COUNT value in the detection packet.

In an embodiment, a detection method for a count parameter COUNT of a PDCP layer may include that: a detection packet carrying a COUNT value is received via a PDCP layer; and the COUNT value in the detection packet is compared with a COUNT value locally stored to judge whether the COUNT value in the detection packet and the COUNT value locally stored are consistent.

In an embodiment, a detection method for a count parameter COUNT of the PDCP layer may include that: when detecting that a detection condition for the COUNT of the PDCP layer is satisfied, a sending terminal sends a detection packet carrying a COUNT value to a receiving terminal via the PCDP layer; and after receiving the detection packet which is sent via the PDCP layer and carries the COUNT value, the receiving terminal compares the COUNT value in the detection packet with a COUNT value stored in the receiving terminal to judge whether the COUNT value in the detection packet and the COUNT value stored in the receiving terminal are consistent.

When the COUNT value in the detection packet and the COUNT value stored in the receiving terminal are inconsistent, the above-mentioned embodiment may further include that: a communication link between the sending terminal and the receiving terminal is re-established, or, the COUNT value stored in the receiving terminal is modified into the COUNT value in the detection packet.

A sending terminal may be arranged to detect a count parameter COUNT of a PDCP layer. In an embodiment, the sending terminal may include a detection component and a sending component, wherein the detection component is arranged to detect whether a detection condition for the COUNT of the PDCP layer is satisfied; and the sending component is arranged to send, when the detection component detects that the detection condition is satisfied, a detection packet carrying a COUNT value via the PCDP layer.

The sending terminal in the above-mentioned embodiment may further include a processing component. The processing component may be arranged to determine a data packet, which is prior to and immediately adjacent to the detection packet in the PDCP layer, and take a COUNT value corresponding to the data packet as the COUNT value in the detection packet.

A receiving terminal may be arranged to detect a count parameter COUNT of a PDCP layer. In an embodiment, the receiving terminal may include a receiving component and a comparison component, wherein the receiving component is arranged to receive a detection packet carrying a COUNT value via a PDCP layer; and the comparison component is arranged to compare the COUNT value in the detection packet with a COUNT value locally stored.

In an embodiment, a detection system for a count parameter COUNT of a PDCP layer may include a sending terminal and a receiving terminal. The sending terminal may be arranged to send, when detecting that a detection condition for the COUNT of the PDCP layer is satisfied, a detection packet carrying a COUNT value to the receiving terminal via the PCDP layer. The receiving terminal may be arranged to compare, after receiving the detection packet which is sent via the PDCP layer and carries the COUNT value, the COUNT value in the detection packet with a COUNT value stored in the receiving terminal to judge whether the COUNT value in the detection packet and the COUNT value stored in the receiving terminal are consistent.

The detection system in the above-mentioned embodiment may further include a modification apparatus. The modification apparatus may be arranged to, when the COUNT value in the detection packet and the COUNT value stored in the receiving terminal are inconsistent, re-establish a communication link between the sending terminal and the receiving terminal, or, modify the COUNT value stored in the receiving terminal into the COUNT value in the detection packet.

A computer-readable storage medium may store a computer-executable instruction. The computer-executable instruction may be arranged to execute any one of the above-mentioned methods.

According to the detection method, the sending terminal, the receiving terminal and the detection system provided in the present disclosure, COUNT check of the sending terminal and the receiving terminal is completed in the PDCP layer by adopting packets of the PDCP layer. Since both the data packet and the detection packet are transmitted in the PDCP layer and a Radio Link Control (RLC) layer ensures ordered delivery of the packets of the PDCP layer, the receiving terminal receives check packets as the sequence in which the sending terminal sends packets, so the COUNT value parsed by the receiving terminal is the COUNT value corresponding to the data packet lastly sent by the sending terminal. It may be judged whether the COUNT values of the sending terminal and the receiving terminal are inconsistent by comparing with the COUNT locally stored value (a COUNT value corresponding to the data packet lastly received). Subsequent operations are executed according to a judgement result, thereby solving the problem in the related art that a detection result is wrong due to adoption of a message of an RRC layer as a detection packet, and ensuring the detection correctness of the COUNT of the PDCP layer.

### Brief Description of the Drawings

Fig. 1 is a structural diagram of a detection system according to a first embodiment of the present disclosure; and
Fig. 2 is a flowchart of a detection method according to a second embodiment of the present disclosure.

### Detailed Description of the Embodiments

The detailed description of the embodiments will be made with the drawings.

### First embodiment

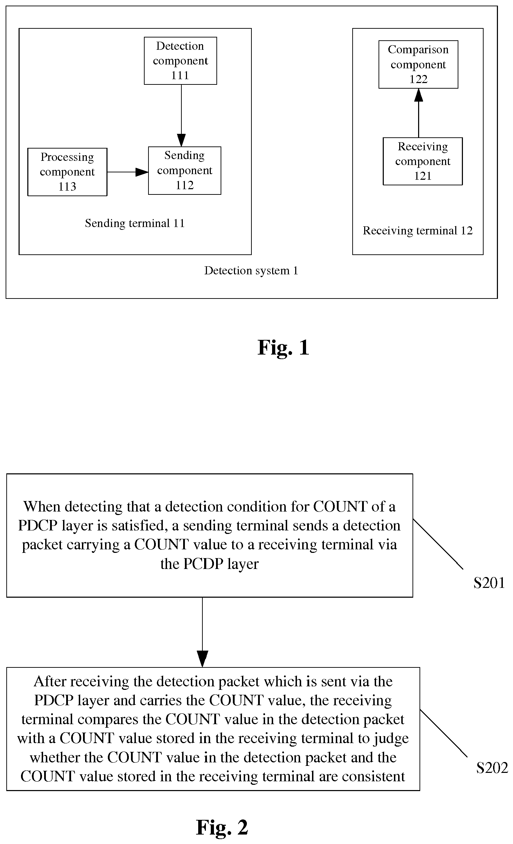

Fig. 1 is a structural diagram of a detection system according to a first embodiment of the present disclosure. Referring to Fig. 1, in the present embodiment, a detection system 1 includes a sending terminal 11 and a receiving terminal 12.

The sending terminal 11 is arranged to send, when detecting that a detection condition for COUNT of a PDCP layer is satisfied, a detection packet carrying a COUNT value to the receiving terminal via the PCDP layer. In practical application, the sending terminal 11 may be a base station, or a terminal. The operation that the sending terminal 11 detects whether the detection condition for the COUNT of the PDCP layer is satisfied may be decided according to a policy of the sending terminal, such as time period trigger, packet number threshold trigger, and packet loss rate threshold trigger.

The receiving terminal 12 is arranged to compare, after receiving the detection packet which is sent via the PDCP layer and carries the COUNT value, the COUNT value in the detection packet with a COUNT value stored in the receiving terminal to judge whether the COUNT value in the detection packet and the COUNT value stored in the receiving terminal are consistent.

The receiving terminal 12 and the sending terminal 11 belong to two ends of the same service chain. In practical application, a DRB service is borne by the PDCP layer. So the receiving terminal 12 and the sending terminal 11 involved in the present disclosure are both ends of the DRB service. COUNT values of both ends are the number of data packets sent/received by the sending terminal 11 and the receiving terminal 12 generally. The PDCP layer encrypts/decrypts the data packets by using the COUNT values. If a data packet is lost during a service process, subsequent data packets will be wrongly decrypted and will be further abandoned by as invalid data packets until the DRB service is crashed. According to the present disclosure, a COUNT detection packet is sent to detect whether the COUNT values of the two ends are consistent so as to judge whether it is necessary to modify the COUNT values. When the COUNT values of the two ends are inconsistent, the COUNT values of the two ends are made consistent in many ways, so it may be ensured that the subsequent data packets are correctly encrypted/decrypted. Because the service packet and the detection packet have the same dispatching grade in the PDCP layer, the COUNT detection packet is sent in the PDCP layer. So the sequence that the receiving terminal receives packets is consistent with the sequence that the sending terminal sends the packets. The phenomenon in the related art that a COUNT detection result is inaccurate via an RRC layer message, which is resulted in that the sequence that the receiving terminal receives the packets is possibly inconsistent with the sequence that the sending terminal sends the packets, does not occur.

In some embodiments, the detection system in Fig. 1 further includes a modification apparatus. The modification apparatus is arranged to, when the COUNT value in the detection packet and the COUNT value stored in the receiving terminal are inconsistent, re-establish a communication link between the sending terminal and the receiving terminal, or, modify the COUNT value stored in the receiving terminal into the COUNT value in the detection packet.

The modification apparatus may exist in a plurality of sub-devices. For example, these sub-devices have a function of disconnecting a DRB service or re-establishing the DRB service between the sending terminal 11 and the receiving terminal 12. When the COUNT values of the two ends are different, these sub-devices disconnect the current DRB service, and create a DRB service having the same effect. At this time, the COUNT values of the two ends are the same for the created DRB service. For another example, these sub-devices have a function of modifying the COUNT value of the receiving terminal into the COUNT value of the sending terminal, so the modified COUNT values of the two ends are the same.

In some examples, as shown in Fig. 1, the embodiments of the present disclosure provide a sending terminal 11, arranged to detect a count parameter COUNT of a PDCP layer. The sending terminal 11 includes a detection component 111 and a sending component 112, wherein the detection component 111 is arranged to detect whether a detection condition for the COUNT of the PDCP layer is satisfied; and the sending component 112 is arranged to send, when the detection component 111 detects that the detection condition is satisfied, a detection packet carrying a COUNT value via the PCDP layer. The detection packet sent by the sending component 112 may be realized by modifying the type of a control packet in the current PDCP layer, and adding a detection packet (a new control packet) dedicated to detect COUNT. An operator may select an implementation mode for detecting packets according to actual situations.

Under the situation that a detection packet dedicated to detect COUNT is newly added besides all packet types of the current PDCP layer, the newly added detection packet may adopt a general format of a control packet in the PDCP layer. The general format of a control packet sequentially includes a D/C field (occupying 1 byte), a PDU TYPE field (representing the type of a detection packet, occupying 8 bytes) and a COUNT field (occupying 4 bytes). For example, when the sending terminal sends a data packet of which an SN is 4095, 0 and a COUNT sending condition (e.g., a cycle ends) is satisfied, a COUNT detection packet is constructed, wherein D/C field=1, PDU TYPE=0x10, COUNT=0x2000; the COUNT detection packet is sent to the receiving terminal; and then a data packet is continuously sent, where the SN is 1, 2.

The sending terminal 11 in the above-mentioned embodiment further includes a processing component 113. The processing component 113 is arranged to determine a data packet, which is prior to and immediately adjacent to the detection packet in the PDCP layer, and take a COUNT value corresponding to the data packet as the COUNT value in the detection packet. A COUNT value determination mechanism in the detection packet is given in the present embodiment, and the COUNT value corresponding to the data packet which is prior to and immediately adjacent to the detection packet is taken as the COUNT value in the detection packet, thereby simplifying the processing flow.

In some embodiments, as shown in Fig. 1, the embodiments of the present disclosure provide a receiving terminal 12, arranged to detect a count parameter COUNT of a PDCP layer. The receiving terminal 12 includes a receiving component 121 and a comparison component 122, wherein the receiving component 121 is arranged to receive a detection packet carrying a COUNT value via a PDCP layer; and the comparison component 122 is arranged to compare the COUNT value in the detection packet with a COUNT value locally stored.

In some embodiments, a detection method for a count parameter COUNT of a PDCP layer provided in the embodiments of the present disclosure includes the following acts. It is detected whether a detection condition for the COUNT of the PDCP layer is satisfied; and when the detection condition is satisfied, a detection packet carrying a COUNT value is sent via the PCDP layer.

In some embodiments, the above-mentioned embodiment further includes the following act. A data packet, which is prior to and immediately adjacent to the detection packet in the PDCP layer, is determined, and a COUNT value corresponding to the data packet is taken as the COUNT value in the detection packet.

In some embodiments, a detection method for a count parameter COUNT of a PDCP layer provided in the embodiments of the present disclosure includes the following acts. A detection packet carrying a COUNT value is received via a PDCP layer; and the COUNT value in the detection packet is compared with a COUNT value locally stored to judge whether the COUNT value in the detection packet and the COUNT value locally stored are consistent.

### Second embodiment:

Fig. 2 is a flowchart of a detection method according to a second embodiment of the present disclosure. Referring to Fig. 2, in the present embodiment, a detection method for a count parameter COUNT of a PDCP layer includes the following acts.

At S201, when detecting that a detection condition for COUNT of a PDCP layer is satisfied, a sending terminal sends a detection packet carrying a COUNT value to a receiving terminal via the PCDP layer.

At S202, after receiving the detection packet which is sent via the PDCP layer and carries the COUNT value, the receiving terminal compares the COUNT value in the detection packet with a COUNT value stored in the receiving terminal to judge whether the COUNT value in the detection packet and the COUNT value stored in the receiving terminal are consistent.

In some embodiments, when the comparison result of the act S202 is inconsistent, the method shown in Fig. 2 further includes the following act. A communication link between the sending terminal and the receiving terminal is re-established, or, the COUNT value stored in the receiving terminal is modified into the COUNT value in the detection packet.

Those skilled in the art may understand that all or some acts in the above-mentioned method may be completed by using a computer program flow, wherein the computer program may be stored in a computer-readable storage medium; the computer program is executed on a corresponding hardware platform (e.g., system, equipment, apparatus and device); and when being executed, the computer program includes one or a combination of the acts in the method embodiment.

Alternatively, all or some acts in the above-mentioned method may also be implemented by using integrated circuits. These acts may be manufactured into each integrated circuit component respectively, or multiple components or acts therein are manufactured into a single integrated circuit component.

Apparatuses/function components/function units in the above-mentioned embodiment may be implemented by using a general calculation apparatus; and may be centralized on a single calculation apparatus, or may be distributed on a network composed of multiple calculation apparatuses.

When the apparatuses/function components/function units in the above-mentioned embodiment are implemented in a form of a software function component and are sold or used as independent products, they may be stored in a computer-readable storage medium. The above-mentioned computer-readable storage medium may be a read-only memory, a magnetic disk or an optical disc.

### Industrial Applicability

COUNT check of the sending terminal and the receiving terminal is completed in the PDCP layer by adopting packets of the PDCP layer. Since both the data packet and the detection packet are transmitted in the PDCP layer and a Radio Link Control (RLC) layer ensures ordered delivery of the packets of the PDCP layer, the receiving terminal receives check packets as the sequence in which the sending terminal sends packets, so the COUNT value parsed by the receiving terminal is the COUNT value corresponding to the data packet lastly sent by the sending terminal. It may be judged whether the COUNT values of the sending terminal and the receiving terminal are inconsistent by comparing with the COUNT locally stored value (a COUNT value corresponding to the data packet lastly received). Subsequent operations are executed according to a judgement result, thereby solving the problem in the related art that a detection result is wrong due to adoption of a message of an RRC layer as a detection packet, and ensuring the detection correctness of the COUNT of the PDCP layer.

## Claims

1. A detection method for a count parameter COUNT of a Packet Data Convergence Protocol, PDCP, layer, comprising:
detecting whether a detection condition for the COUNT of the PDCP layer is satisfied; and
when the detection condition is satisfied, sending a detection packet carrying a COUNT value via the PCDP layer.

2. The detection method for the COUNT of the PDCP layer as claimed in claim 1, further comprising: determining a data packet, which is prior to and immediately adjacent to the detection packet in the PDCP layer, and taking a COUNT value corresponding to the data packet as the COUNT value in the detection packet.

3. A detection method for a count parameter COUNT of a Packet Data Convergence Protocol, PDCP, layer, comprising:
receiving a detection packet carrying a COUNT value via a PDCP layer; and
comparing the COUNT value in the detection packet with a COUNT value locally stored to judge whether the COUNT value in the detection packet and the COUNT value locally stored are consistent.

4. A detection method for a count parameter COUNT of a Packet Data Convergence Protocol, PDCP, layer, comprising:
when detecting that a detection condition for the COUNT of the PDCP layer is satisfied, sending, by a sending terminal, a detection packet carrying a COUNT value to a receiving terminal via the PCDP layer; and
after receiving the detection packet which is sent via the PDCP layer and carries the COUNT value, comparing, by the receiving terminal, the COUNT value in the detection packet with a COUNT value stored in the receiving terminal to judge whether the COUNT value in the detection packet and the COUNT value stored in the receiving terminal are consistent.

5. The detection method for the COUNT of the PDCP layer as claimed in claim 4, wherein when the COUNT value in the detection packet and the COUNT value stored in the receiving terminal are inconsistent, the method further comprises: re-establishing a communication link between the sending terminal and the receiving terminal, or, modifying the COUNT value stored in the receiving terminal into the COUNT value in the detection packet.

6. A sending terminal, arranged to detect a count parameter COUNT of a Packet Data Convergence Protocol, PDCP, layer, comprising a detection component and a sending component, wherein
the detection component is arranged to detect whether a detection condition for the COUNT of the PDCP layer is satisfied; and
the sending component is arranged to send, when the detection component detects that the detection condition is satisfied, a detection packet carrying a COUNT value via the PCDP layer.

7. The sending terminal as claimed in claim 6, further comprising a processing component, wherein the processing component is arranged to determine a data packet, which is prior to and immediately adjacent to the detection packet in the PDCP layer, and take a COUNT value corresponding to the data packet as the COUNT value in the detection packet.

8. A receiving terminal, arranged to detect a count parameter COUNT of a Packet Data Convergence Protocol, PDCP, layer, comprising a receiving component and a comparison component, wherein
the receiving component is arranged to receive a detection packet carrying a COUNT value via a PDCP layer; and
the comparison component is arranged to compare the COUNT value in the detection packet with a COUNT value locally stored.

9. A detection system for a count parameter COUNT of a Packet Data Convergence Protocol, PDCP, layer, comprising a sending terminal as claimed in claim 6 or 7 and a receiving terminal as claimed in claim 8, wherein the sending terminal is arranged to send, when detecting that a detection condition for the COUNT of the PDCP layer is satisfied, a detection packet carrying a COUNT value to the receiving terminal via the PCDP layer; and the receiving terminal is arranged to compare, after receiving the detection packet which is sent via the PDCP layer and carries the COUNT value, the COUNT value in the detection packet with a COUNT value stored in the receiving terminal to judge whether the COUNT value in the detection packet and the COUNT value stored in the receiving terminal are consistent.

10. The detection system for the COUNT of the PDCP layer as claimed in claim 9, further comprising a modification apparatus, wherein the modification apparatus is arranged to, when the COUNT value in the detection packet and the COUNT value stored in the receiving terminal are inconsistent, re-establish a communication link between the sending terminal and the receiving terminal, or, modify the COUNT value stored in the receiving terminal into the COUNT value in the detection packet.

11. A computer-readable storage medium, which stores a computer-executable instruction, wherein the computer-executable instruction is arranged to execute a method as claimed in any one of claims 1 to 5.
